# EUROPÄISCHE PATENTSCHRIFT

(11) **EP 1 362 183 B1**
(45) Veröffentlichungstag und Bekanntmachung des Hinweises auf die Patenterteilung: **24.05.2006**
(21) Anmeldenummer: 02714132.4
(22) Anmeldetag: 25.01.2002
(51) Int. Cl.: F03D 7/02

(54) **AZIMUTHSNACHFÜHRUNG EINER WINDKRAFTANLAGE**
WIND ENERGY PLANT
INSTALLATION D'ENERGIE EOLIENNE

(30) Priorität: 10.02.2001 DE 10106208
(43) Veröffentlichungstag der Anmeldung: 19.11.2003
(60) Teilanmeldung: 05111606.9
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/000898
(87) Internationale Veröffentlichungsnummer: WO 2002/064973

(56) Entgegenhaltungen:
- EP-A- 0 149 467
- EP-A- 0 995 904
- DE-A- 19 739 162
- DE-A- 19 846 796
- DE-A- 19 920 504
- US-A- 4 084 921
- US-A- 4 297 076

## Beschreibung

Die vorliegende Erfindung betrifft eine Windenergieanlage mit einem Turm und einem an dem Turm angeordneten Rotor mit wenigstens einem einzeln verstellbaren Rotorblatt, mit einer Vorrichtung zur Erfassung der Windrichtung und einer Vorrichtung zur Erfassung der Azimutposition.

Solche Windenergieanlagen haben in der Regel für die Windrichtungsnachführung einen aktiven Antrieb. Dieser verdreht das Maschinenhaus der Windenergieanlage derart, dass die Rotorblätter des Rotors in Richtung des Windes ausgerichtet werden, sofern die Anlage als Luv-Läufer ausgebildet ist. Dieser für die Windrichtungsnachführung benötigte Antrieb ist regelmäßig ein Azimutantrieb, welcher sich mit den zugehörigen Azimutlagern gewöhnlich zwischen der Spitze des Turmes und dem Maschinenhaus befindet.

Bei der Windrichtungsnachführung des Maschinenhauses liefert ein Betriebswind-Meßsystem einen Mittelwert für die Windrichtung über einen gewissen Zeitraum, z. B. zehn Sekunden. Dieser Mittelwert wird stets mit der momentanen Azimutposition des Maschinenhauses verglichen. Sobald eine Abweichung einen bestimmten Wert überschreitet, wird das Maschinenhaus entsprechend nachgeführt, so dass die Windrichtungsabweichung des Rotors, der Gierwinkel, möglichst gering ist, um Leistungsverluste zu vermeiden.

Wie eine Windrichtungsnachführung bei bekannten Windenergieanlagen durchgeführt wird, ist in "Windkraftanlagen", Erich Hau, 2. Auflage, 1996, S. 268 ff. bzw. 316 ff. beschrieben.

Weiterhin ist eine solche Windrichtungsnachführung aus der Offenlegungsschrift DE 199 20 504 oder DE 197 39162 bekannt.

Bei diesen bekannten Vorrichtungen ist es jedoch nachteilig, dass für jede Windrichtungsnachführung die häufig als Elektromotoren ausgebildeten Azimutantriebe betätigt werden müssen. Die häufige Betätigung führt zu einer hohen Belastung und dementsprechend zu einer relativ schnellen Alterung und hohem Verschleiß bei diesen Antrieben.

Weiterhin ist es bei solchen bekannten Lösungen nachteilig, dass zunehmende Anlagengrößen konsequenterweise mehr bzw. größere Antriebe erfordern, um die erforderliche Verstellung bewirken zu können. Diese größeren Antriebe erfordern jedoch insbesondere im Falle einer Störung bzw. eines erforderlichen Austausches einen beträchtlich höheren Aufwand, da diese dann nur noch mit Hilfe eines Kranes aus dem bzw. in das Maschinenhaus befördert werden können. Bezieht man weiterhin eine Nabenhöhe von 130 m und mehr in die Überlegungen ein, ergibt sich bereits bei an Land aufgestellten Anlagen ein beträchtlicher Aufwand - dieser steigt jedoch weit über alle akzeptablen Grenzen hinaus, wenn eine Offshore-Anlage betroffen ist. Darüber hinaus steigt natürlich auch der Raumbedarf dieser Antriebe.

Aufgabe der vorliegenden Erfindung ist es daher, eine Windenergieanlage der eingangs genannten Art derart weiterzubilden, dass die Lebensdauer der Azimutantriebe verlängert wird und/oder die Verwendung kleinerer und damit besser handhabbarer Azimutantriebe ermöglicht wird.

Diese Aufgabe wird bei einer Windenergieanlage der eingangs genannten Art erfindungsgemäß gelöst durch eine Steuerung der Rotorblattverstellung in Abhängigkeit einer Abweichung zwischen Windrichtung und Azimutposition. Durch diese erfindungsgemäße Steuerung kann ein beträchtlicher Anteil der Windrichtungsnachführung ohne Einschaltung eines Azimutantriebes bewerkstelligt werden, da die für die Windrichtungsnachführung erforderlichen Kräfte durch eine geeignete Verstellung des Anstellwinkels der Rotorblätter erzeugt werden können.

Durch die Erfindung wird die Möglichkeit bereitgestellt, neben der bisher üblichen Azimutverstellung mittels eines motorischen Antriebs zusammen mit dem motorischen Antrieb oder alternativ dazu die Azimutstellung durch eine Steuerung der Rotorblattverstellung in Abhängigkeit einer Abweichung zwischen Windrichtung und Azimutposition vorzunehmen. Dies ist unter Umständen besonders dann vorteilhaft, wenn nur kleine Azimutänderungen vorgenommen werden müssen. Dadurch wird insgesamt der motorische Azimutantrieb geschont.

Besteht beispielsweise der motorische Azimutantrieb aus zwei oder mehr Asynchron-Motoren, so können zur Azimutverstellung diese Motoren mit entsprechendem Drehstrom versorgt werden, die Abbremsung des Maschinenhauses erfolgt jedoch mittels Gleichstromversorgung der Asynchron-Motoren und auch während des Stillstandes werden die Asynchron-Motoren mit Gleichstrom versorgt, so dass eine mechanische Bremse nicht unbedingt notwendig ist. Soll nun die Verstellung des Maschinenhauses, also die Azimutverstellung mittels der Steuerung der Rotorblattverstellung vorgenommen werden, muss die motorische Bremsung aufgehoben werden, was bevorzugt dadurch geschieht, dass der Gleichstrom äußerst gering oder Null ist.

In einer bevorzugten Ausführungsform der Erfindung wird die Abweichung zwischen Windrichtung und Azimutposition bei einer auf einer schwimmenden Plattform oder im Wasser schwebenden Plattform als Träger einer erfindungsgemäßen Windenergieanlage aus einer Erfassung der Auslenkung der Plattform aus der Horizontalen bzw. der Auslenkung des Turmes der Windenergieanlage aus der Vertikalen ermittelt. So kann auf einfache Weise eine sich zwangsläufig aus einer Differenz zwischen Windrichtung und Azimutposition ergebende Neigung erfasst werden.

In einer insbesondere bevorzugten Ausführungsform der Erfindung weist die erfindungsgemäße Windenergieanlage als Azimutlager ein Gleitlager auf, dass durch vorgegebene Gleiteigenschaften einerseits ein Schlagen des Turmkopfes bei schnellen Windrichtungsänderungen verhindert aber andererseits bei ausreichend großen Kräften eine Windrichtungsnachführung ohne motorischen Antrieb gestattet.

Weiterhin wird erfindungsgemäß ein Verfahren zur Steuerung des Anstellwinkels eines Rotorblattes einer Windenergieanlage angegeben. Dieses Verfahren ermittelt aus
- einer Differenz zwischen Windrichtung und Azimutposition und/oder
- einer Auslenkung der Plattform aus der Horizontalen und/oder
- einer Auslenkung des Turmes aus der Vertikalen
einen Windrichtungswechsel und der Betrag des Windrichtungswechsels und dessen Dauer werden mit vorgebbaren Schwellwerten verglichen. Auf diese Weise kann erkannt werden, ob es erforderlich ist, die Windrichtungsnachführung in Gang zu setzen.

Weitere vorteilhafte Ausführungsformen sind in den Unteransprüchen angegeben.

Nachfolgend wird eine Ausführungsform der vorliegenden Erfindung anhand der Figuren näher erläutert. Dabei zeigen:
- Fig. 1: eine Draufsicht auf ein Maschinenhaus einer Windenergieanlage;
- Fig. 2: eine Windenergieanlage auf einer im Wasser schwebenden Plattform;
- Fig. 3: eine vereinfachte Darstellung einer erfindungsgemäßen Steuerung;
- Fig. 4: eine Aufsicht auf ein Azimutlager mit vier Antrieben; und
- Fig. 5: ein Schaltbild für einen Azimutmotor.

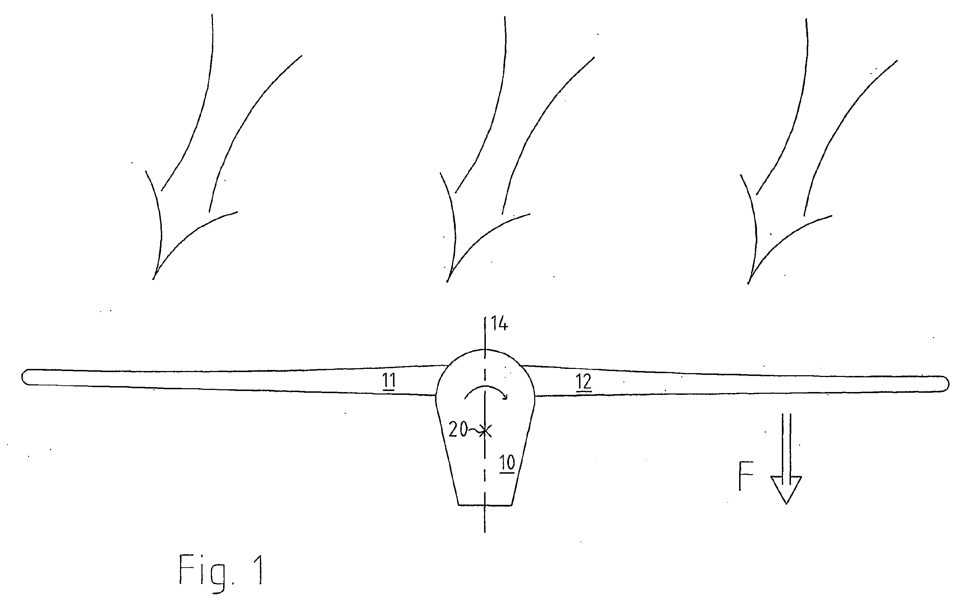

Figur 1 ist eine Draufsicht auf eine Windenergieanlage mit dem Maschinenhaus 10 und Rotorblättern 11, 12. Der Drehpunkt des Maschinenhauses 10 ist durch einen Punkt 20 markiert, die Hauptachse des Horizontalachsen-Rotors ist durch eine Mittellinie 14 kenntlich gemacht.

Sobald sich nun eine Abweichung zwischen der Hauptachse 14 des Rotors und der Windrichtung ergibt, welche in dieser Figur durch schräg verlaufende Pfeile angedeutet ist, wird geprüft, ob ein vorgebbarer Schwellwert für den Betrag der Windrichtungsänderung und die Dauer erreicht bzw. überschritten ist. Ist dies der Fall, wird der Anstellwinkel des in der Figur links dargestellten Rotorblattes 11 so verändert, dass der Luftwiderstand geringer wird. Dadurch ergibt sich ein Kräfteungleichgewicht zwischen den beiden Rotorblättern 11, 12 und es entsteht durch den nunmehr höheren Luftwiderstand des rechten Rotorblattes 12 eine Kraft F, welche das Maschinenhaus 10 mit einem Drehmoment in Richtung des oberhalb des Drehpunktes 20 dargestellten Pfeiles beaufschlagt. Auf diese Weise wird der Rotor dem Wind nachgeführt, ohne dass der Azimutantrieb eingeschaltet werden muss.

Übersteigt die Differenz zwischen der Hauptachse 14 des Rotors und der Windrichtung einen vorgebbaren Schwellwert; kann zur Unterstützung der Drehung und zur Verringerung der asymmetrischen Belastung ein vorhandener Azimutantrieb eingeschaltet werden. Dieser Azimutantrieb ist auch erforderlich, wenn der Wind vollständig abgeflaut ist und nach einer windstillen Phase aus einer anderen Richtung weht, die eine Nachführung des Rotors durch die Verstellung des Anstellwinkels in der vorstehend beschriebenen Weise ausschließt.

In einer alternativen Ausführungsform der Erfindung ist es natürlich möglich, bei der in Figur 1 gezeigten Situation anstelle der Verringerung des Luftwiderstandes des linken Rotorblattes 11 den Luftwiderstand des rechten Rotorblattes 12 zu erhöhen. Diese Erhöhung des Luftwiderstandes des rechten Rotorblattes 12 würde allerdings eine höhere Beanspruchung dieses Rotorblattes 12 zur Folge haben und damit dessen Lebensdauer nachteilig beeinflussen. Daher ist eine Verringerung des Luftwiderstandes des linken Rotorblattes 11 und somit eine Verringerung der Belastung dieses Rotorblattes 11 vorzuziehen.

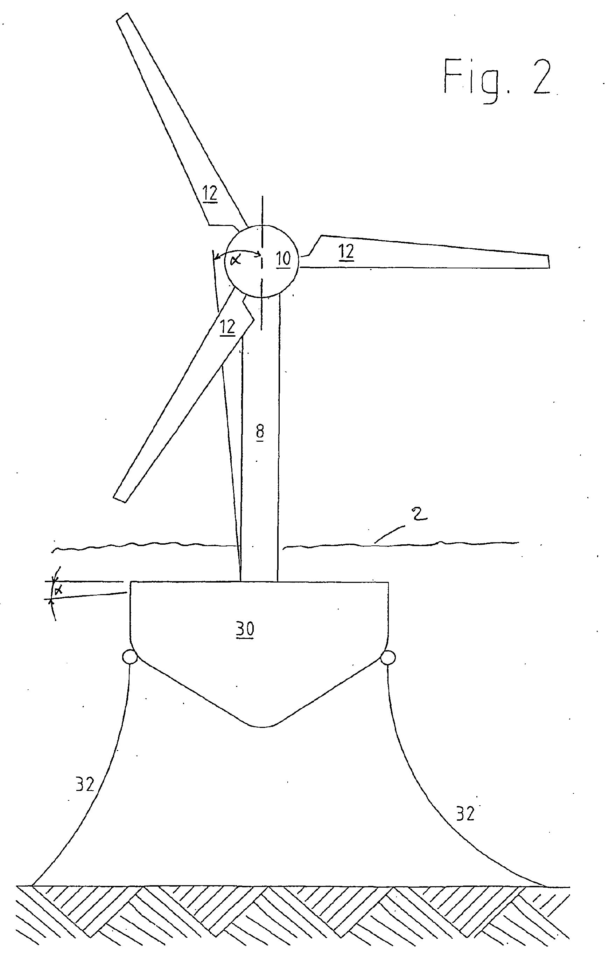

Figur 2 zeigt eine Windenergieanlage auf einer im Wasser schwebenden Plattform 30, die z. B. durch wenigstens zwei Ankerketten 32 in ihrer vorgegebenen Position gehalten wird.

Dabei befindet sich die Plattform 30 unter der Wasseroberfläche 2, während der Turm 8 der Windenergieanlage aus dem Wasser herausragt und das Maschinenhaus 10 mit den Rotorblättern 12 trägt.

Solange der Wind genau frontal auf die Windenergieanlage auftrifft, wird sich ein Nickmoment ergeben, dass die Windenergieanlage in der in Figur 2 gezeigten Perspektive nach hinten auslenkt. Sobald die Windrichtung allerdings schräg verläuft, kommt zu der frontalen Komponente noch eine laterale Komponente hinzu. Diese laterale Komponente wird zusätzlich zu der nach hinten gerichteten Auslenkung eine zur Seite gerichtete Auslenkung bewirken. Diese äußert sich einerseits in einer Neigung der Oberfläche der Plattform 30 aus der Horizontalen heraus bzw. durch eine Neigung des Turmes 8 der Windenergieanlage aus der Vertikalen heraus um einen vorgegebenen Betrag, der in der Figur durch den Winkel α einerseits am Turm 8 der Windenergieanlage und andererseits an der Oberfläche der Plattform 30 angedeutet ist.

Während die Auslenkung an der Oberfläche der Plattform noch relativ gering ist, kann die Auslenkung aus der Lotrechten an der Spitze des Turmes 8 bereits einen deutlich erfassbaren Betrag aufweisen, so dass durch eine Erfassung an der Spitze des Turmes 8 eine sehr empfindliche Vorrichtung zur Erfassung eines Windrichtungswechsels und einer sich daraus ergebenden Auslenkung verwirklicht werden kann.

Bei der Erfassung der Auslenkung ist natürlich zu beachten, dass nur eine Auslenkung durch die laterale Windkomponente für die erfindungsgemäße Steuerung relevant ist.

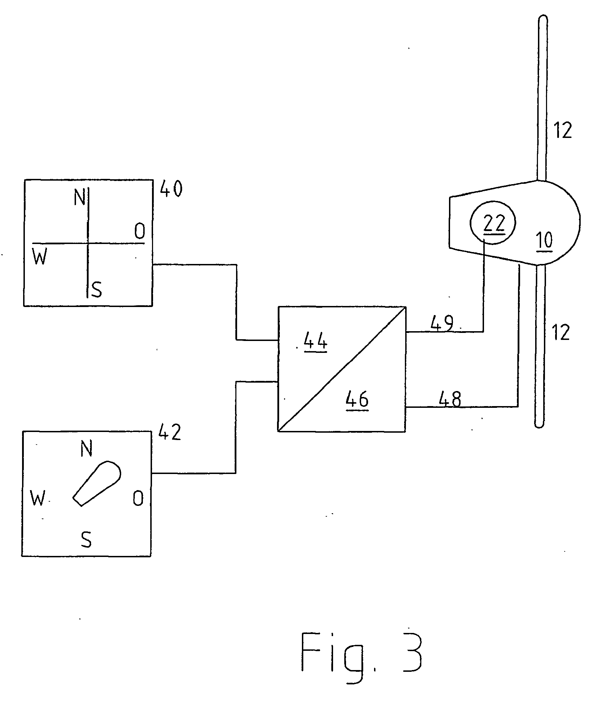

Figur 3 zeigt ein Ausführungsbeispiel für die Steuerung der erfindungsgemäßen Windenergieanlage. Eine Vorrichtung 40 ermittelt die Windrichtung. Diese Vorrichtung 40 kann z. B. eine einfache Windfahne, z. B. mit einem Inkrementalgeber, sein, wie sie ohnehin an jeder Windenergieanlage vorhanden ist. Eine weitere Vorrichtung 42 ermittelt die Azimutposition. Diese beiden Vorrichtungen 40, 42 übermitteln ihre Meßergebnisse bzw. Daten an eine Steuerung 44, welche einerseits die beiden Werte von der Windrichtungserfassung 40 und der Azimutpositionserfassung 42 auswertet und vergleicht und im Bedarfsfall anhand vorgebbarer Kenngrößen über eine Einstellvorrichtung 46 eine geeignete Anpassung des Anstellwinkels der Rotorblätter vornimmt.

Dabei können für den Betrag der Differenz zwischen der Windrichtung und der Azimutposition z. B. drei Schwellwerte vorbestimmt sein. Erreicht die Abweichung zwischen beiden Werten den ersten dieser Schwellwerte für eine bestimmte Zeitdauer, wird der Anstellwinkel eines Rotorblattes 12 durch eine Einstellvorrichtung 46 über eine Steuerleitung 48, z. B. zu einem (nicht dargestellten) Pitchmotor, in einem bestimmten Segment des Rotorkreises derart verstellt, dass sich sein Luftwiderstand verringert, so dass das Maschinenhaus 10 mit dem Rotor dem Wind nachgeführt wird, bis Windrichtung und Azimutposition innerhalb ebenfalls vorgebbarer Toleranzgrenzen wieder übereinstimmen. Die Steuerung 44 stellt dann wieder die für eine optimale Energieausbeute geeignete Einstellung der Rotorblätter 11, 12 her.

Ergibt sich bei der Auswertung der Daten der zweite Schwellwert der Abweichung zwischen Azimutposition und Windrichtung, kann die Steuerung 44, z. B. über eine separate Steuerungsleitung 49, den Azimutantrieb 22 einschalten und somit die Windrichtungsnachführung unterstützen. Der dritte Schwellwert kann so bestimmt sein, dass dann eine Windrichtungsnachführung durch die Veränderung des Anstellwinkels eines Rotorblattes nicht mehr möglich ist, so dass hier der Azimutantrieb 22 zwingend erforderlich ist.

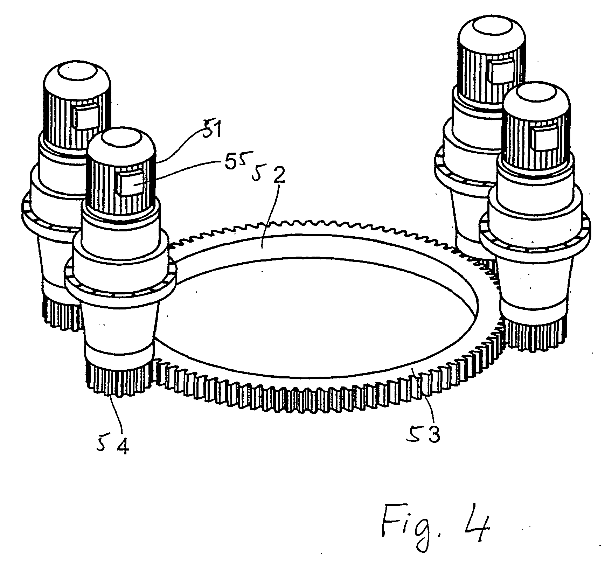

Fig. 4 zeigt eine aktive Windrichtungsnachführungseinrichtung mittels eines motorischen Azimutantriebs. Dieser motorische Antrieb verdreht den Maschinenkopf der Windenergieanlage so, dass der Rotor der Windenergieanlage in Richtung des Windes optimal ausgerichtet ist. Ein solcher aktiver Antrieb für die Windrichtungsnachführung kann ein Azimutantrieb 51 mit einem dazugehörigen Azimutlager 52 sein. Dieses Azimutlager befindet sich zwischen dem Turmkopf und dem Maschinenhaus. Bei kleinen Windenergieanlagen genügt ein Azimutantrieb, größere Windenergieanlagen sind in der Regel mit mehreren Azimutantrieben ausgestattet, z.B. vier Azimutantrieben, wie in Fig. 4 dargestellt. Die vier Antriebe 51 sind gleichmäßig um den Umfang des Turmkopfes verteilt (auch eine ungleichmäßige Verteilung ist möglich).

Die dargestellten Azimutantriebe sind Drehstrom-Asynchronmotoren, welche als Asynchron-Antriebsmaschinen eingesetzt werden. Zur Verstellung, zur aktiven Azimutverstellung werden diese Drehstrom-Asynchronmotoren mit entsprechendem Drehstrom beaufschlagt, bei dem sie ein entsprechendes Drehmoment erzeugen. Nach dem Verstellvorgang des Maschinenhauses (nach Einnahme der gewünschten Azimutposition) werden die vier Drehstrom-Asynchronmotoren (ASM) abgeschaltet und erzeugen somit keinen Drehmoment mehr. Um die Motoren gleichmäßig abzubremsen und auch danach noch ein Bremsmoment zu erhalten, werden die Motoren umgehend nach der Trennung vom Drehstromnetz, möglichst sofort, mit einem Gleichstrom beaufschlagt. Dieser Gleichstrom erzeugt ein stehendes Magnetfeld in den Motoren, die damit sofort abgebremst werden. Die Gleichstromversorgung bleibt möglichst während der gesamten Stillstandszeit bestehen und kann in der Amplitude geregelt werden.

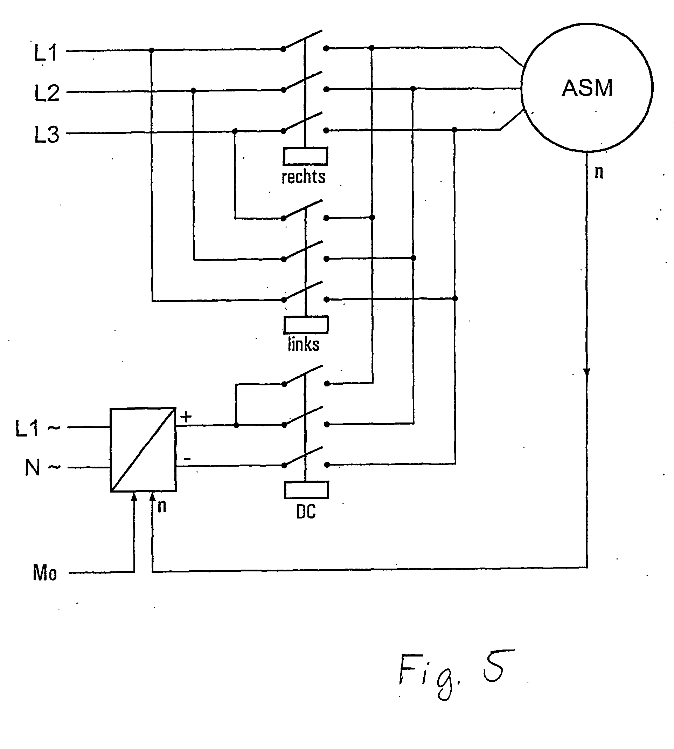

Nach dem Verstellvorgang werden die ASM-Antriebe mittels einer Regeleinrichtung mit einem geregelten Gleichstrom versorgt (s. Fig. 5). Langsame Drehbewegungen des Turmkopfes, die durch unsymmetrische Windböen verursacht werden, werden durch einen kleinen Gleichstrom (ca. 10% vom Mindeststrom) nur gedämpft, aber zugelassen. Schnellere Drehbewegungen werden durch einen angepassten höheren Gleichstrom und damit höheren Bremsmoment vermieden. Bei sehr schnellen Drehbewegungen wird der Gleichstrom bis auf den Nennstrom des Motors angehoben.

Der Asynchron-Motor erzeugt mit der Gleichstrom-Magnetisierung im Stillstand keinen Drehmoment. Aber bei steigender Drehzahl - bis etwa 6% der Nenndrehzahl - steigt das erzeugte Drehmoment linear an und das symmetrisch in beide Drehrichtungen.

Es ist auch sinnvoll, die einzelnen Motoren der Azimutantriebe mit Hilfe eines Stromtransformators zu koppeln. Eine einfache Gegenkopplung der Asynchron-Motoren stabilisiert hierbei die einzelnen Antriebe.

Wenn also - wie beschrieben - die Azimutverstellung nicht mittels aktiver Drehstrombeaufschlagung der Asynchron-Motoren erfolgen soll, wird der Gleichstrom der Asynchron-Azimutantriebe auf Null gesetzt oder so gering gemacht, dass noch eine kontrollierte Verstellung des Azimuts mittels der Rotorblattwinkelverstellung erfolgen kann. Um beispielsweise ein geringes Bremsgegenmoment aufrechtzuerhalten, kann es auch vorteilhaft sein, den Gleichstrom der Asynchron-Motoren auf einen Wert zwischen 1 % und 10% des Nennstroms zu begrenzen, so dass über die Bremswirkung der Gleitlager hinaus auch noch ein motorisches Bremsmoment gegeben ist, welches es ermöglicht, dass die Azimutänderung auf die erwünschte Art und Weise und ohne zu großen Ausschlag erfolgen kann.

## Patentansprüche

1. Windenergieanlage, mit einem Turm (8) und mit einem am Turm angeordneten Rotor mit wenigstens einem einzeln verstellbaren Rotorblatt, (11, 12) mit einer Vorrichtung zur Erfassung der Windrichtung (40) und einer Vorrichtung zur Erfassung der Azimutposition (42),
**gekennzeichnet durch** eine Steuerung der Rotorblattverstellung in Abhängigkeit einer Abweichung zwischen der ermittelten Windrichtung und der erfassten Azimutposition,
eine Vorrichtung zur Erfassung der Auslenkung des Turms (8) der Windenergieanlage (8, 10, 12) aus der Vertikalen.

2. Windenergieanlage nach Anspruch 1,
**gekennzeichnet durch** eine schwimmende oder im Wasser schwebende Plattform (30) als Träger der Windenergieanlage (8, 10, 12).

3. Windenergieanlage nach Anspruch 2,
**gekennzeichnet durch** eine Vorrichtung zur Erfassung der Auslenkung der Plattform (30) aus der Horizontalen.

4. Windenergieanlage nach Anspruch 2 oder 3,
**gekennzeichnet durch** eine Vorrichtung zur Erfassung der Auslenkung des Turmes (8) der Windenergieanlage (8, 10, 12) aus der Vertikalen.

5. Windenergieanlage nach einem der vorstehenden Ansprüche,
**gekennzeichnet durch** ein als Gleitlager ausgebildetes Azimutlager.

6. Windenergieanlage nach einem der vorstehenden Ansprüche,
**gekennzeichnet durch** eine Bremsvorrichtung zum Bremsen der Azimutdrehung.

7. Windenergieanlage nach einem der vorstehenden Ansprüche,
**dadurch gekennzeichnet, dass** ein Azimutantrieb zur Verstellung der Azimutposition der Windenergieanlage aus wenigstens zwei, vorzugsweise vier Asynchron-Motoren vorgesehen ist, welche während der Azimutverstellung durch Steuerung der Rotorblattverstellung mit keinem oder gegebenenfalls sehr einem sehr geringen Gleichstrom beaufschlagt werden, oder zur Unterstützung der Azimuteinstellung mit einem Drehstrom beaufschlagt werden.

8. Verfahren zur Steuerung des Anstellwinkels eines Rotorblattes einer Windenergieanlage nach einem der vorstehenden Ansprüche,
**dadurch gekennzeichnet, dass** aus einer Differenz zwischen Windrichtung und Azimutposition und/oder einer Auslenkung der Plattform (30) aus der Horizontalen und/oder einer Auslenkung des Turmes (8) aus der Vertikalen ein Windrichtungswechsel ermittelt wird und dass der Betrag des Windrichtungswechsels und dessen Dauer mit vorgebbaren Schwellwerten verglichen werden.

9. Verfahren nach Anspruch 8,
**dadurch gekennzeichnet, dass** bei Überschreiten eines ersten Schwellwertes des Betrages des Windrichtungswechsels und einer vorgegebenen Dauer wenigstens ein Rotorblatt in einem vorgebbaren Bereich des Rotorblattkreises verstellt wird.

10. Verfahren nach Anspruch 8,
**dadurch gekennzeichnet, dass** bei Überschreiten eines zweiten Schwellwertes des Betrages des Windrichtungswechsels wenigstens ein Rotorblatt in einem vorgebbaren Bereich des Rotorblattkreises verstellt und der Azimutantrieb eingeschaltet wird.

11. Verfahren nach Anspruch 8,
**dadurch gekennzeichnet, dass** bei Überschreiten eines dritten Schwellwertes des Betrages des Windrichtungswechsels die Nachführung nur mit dem Azimutantrieb erfolgt.

12. Verfahren nach einem der vorhergehenden Ansprüche,
**dadurch gekennzeichnet, dass** zur Unterstützung der Azimutverstellung mittels Rotorblattverstellung die Azimutantriebe mit einem entsprechenden Strom beaufschlagt werden, damit die Azimuteinstellung schneller vorgenommen werden kann.

13. Verfahren nach einem der vorhergehenden Ansprüche,
**dadurch gekennzeichnet, dass** der motorische Azimutantrieb während der Azimutverstellung mittels Rotorblattverstellung im Bremsbetrieb gefahren wird, beispielsweise dadurch, dass der motorische Azimutantrieb als Asynchron-Motor ausgeführt ist und während der Azimutverstellung mittels Rotorblattverstellung mit einem Gleichstrom, beispielsweise einem Gleichstrom von weniger als 10% des Nennstroms, beaufschlagt wird.

## Claims

1. A wind turbine, comprising a tower (8) and a rotor arranged on the tower and having at least one individually adjustable rotor blade (11, 12), comprising a device for detecting the wind direction (40) and a device for detecting the azimuthal position (42),
**characterised by** control of the rotor blade adjustment in dependence on a deviation between the ascertained wind direction and the detected azimuthal position,
a device for detecting the deflection of the tower (8) of the wind turbine (8, 10, 12) out of the vertical.

2. A wind turbine according to claim 1,
**characterised by** a platform (30) which floats on or in the water as a carrier for the wind turbine (8, 10, 12).

3. A wind turbine according to claim 2,
**characterised by** a device for detecting the deflection of the platform (30) out of the horizontal.

4. A wind turbine according to claim 2 or claim 3,
**characterised by** a device for detecting the deflection of the tower (8) of the wind turbine (8, 10, 12) out of the vertical.

5. A wind turbine according to any one of the preceding claims,
**characterised by** an azimuthal bearing in the form of a plain bearing.

6. A wind turbine according to any one of the preceding claims,
**characterised by** a braking device for braking the azimuthal rotation.

7. A wind turbine according to any one of the preceding claims,
**characterised in that** an azimuthal drive is provided for adjustment of the azimuthal position of the wind turbine, comprising at least two and preferably four asynchronous motors which, during the azimuthal adjustment by control of the rotor blade adjustment, are acted upon by no direct current or, where appropriate, by a very low direct current, or, to assist the azimuthal positioning, are acted upon by a three-phase current.

8. A method for controlling the angle of incidence of a rotor blade of a wind turbine according to any one of the preceding claims,
**characterised in that** a change in wind direction is ascertained from a difference between the wind direction and the azimuthal position and/or a deflection of the platform (30) out of the horizontal and/or a deflection of the tower (8) out of the vertical, and the magnitude of the change in wind direction and the duration thereof are compared with predefinable threshold values.

9. A method according to claim 8,
**characterised in that**, when a first threshold value of the magnitude of the change in wind direction and a predefined duration are exceeded, at least one rotor blade is adjusted in a predefinable sector of the rotor blade circle.

10. A method according to claim 8,
**characterised in that**, when a second threshold value of the magnitude of the change in wind direction is exceeded, at least one rotor blade is adjusted in a predefinable sector of the rotor blade circle and the azimuthal drive is switched on.

11. A method according to claim 8,
**characterised in that**, when a third threshold value of the magnitude of the change in wind direction is exceeded, tracking is effected only with the azimuthal drive.

12. A method according to any one of the preceding claims,
**characterised in that**, to assist the azimuthal adjustment by means of rotor blade adjustment, the azimuthal drives are supplied with an appropriate current in order that the azimuthal positioning can be effected more rapidly.

13. A method according to any one of the preceding claims,
**characterised in that**, during the azimuthal adjustment by means of rotor blade adjustment, the motor azimuthal drive is operated in braking mode, for example by means of the azimuthal drive being in the form of an asynchronous motor and being acted upon during the azimuthal adjustment by means of rotor blade adjustment by a direct current, for example a direct current of less than 10% of the rated current.

## Revendications

1. Installation d'énergie éolienne, comportant une tour (8) et un rotor agencé sur la tour comportant au moins une pale de rotor (11, 12) pouvant être calée individuellement, un dispositif destiné à détecter la direction du vent (40) et un dispositif destiné à détecter la position azimutale (42), **caractérisée par** une commande de calage de la pale de rotor en fonction d'une différence entre la direction du vent déterminée et la position azimutale détectée et par un dispositif destiné à détecter la déviation de la tour (8) de l'installation d'énergie éolienne (8, 10, 12) par rapport à la verticale.

2. Installation d'énergie éolienne selon la revendication 1, **caractérisée par** une plate-forme (30) flottante ou en suspension dans l'eau en tant que support de l'installation d'énergie éolienne (8, 10, 12).

3. Installation d'énergie éolienne selon la revendication 2, **caractérisée par** un dispositif destiné à détecter la déviation de la plate-forme (30) par rapport à l'horizontale.

4. Installation d'énergie éolienne selon la revendication 2 ou 3, **caractérisée par** un dispositif destiné à détecter la déviation de la tour (8) de l'installation d'énergie éolienne (8, 10, 12) par rapport à la verticale.

5. Installation d'énergie éolienne selon l'une quelconque des revendications précédentes, **caractérisée par** un palier azimutal réalisé sous forme de palier lisse.

6. Installation d'énergie éolienne selon l'une quelconque des revendications précédentes, **caractérisée par** un dispositif de freinage destiné à freiner la rotation azimutale.

7. Installation d'énergie éolienne selon l'une quelconque des revendications précédentes, **caractérisée en ce qu'**un dispositif d'orientation destiné à caler la position azimutale de l'installation d'énergie éolienne est prévu, ledit dispositif d'orientation se composant d'au moins deux, de préférence quatre, moteurs asynchrones, lesquels ne sont alimentés avec aucun courant continu ou, le cas échéant, avec un courant continu très faible pendant le calage azimutal via la commande de calage de la pale de rotor, ou sont alimentés avec un courant triphasé en vue de soutenir le réglage azimutal.

8. Procédé de commande de l'angle d'incidence d'une pale de rotor selon l'une quelconque des revendications précédentes, **caractérisé en ce qu'**un changement de la direction du vent est déterminé à partir d'une différence entre la direction du vent et la position azimutale et/ou à partir d'une déviation de la plate-forme (30) par rapport à l'horizontale et/ou à partir d'une déviation de la tour (8) par rapport à la verticale et **en ce que** la valeur du changement de la direction du vent et sa durée sont comparées avec des valeurs de seuil spécifiables.

9. Procédé selon la revendication 8, **caractérisé en ce qu'**en cas de dépassement d'une première valeur de seuil de la valeur du changement de la direction du vent et d'une durée spécifiée, au moins une pale de rotor est calée dans une zone spécifiable du cercle de la pale de rotor.

10. Procédé selon la revendication 8, **caractérisé en ce qu'**en cas de dépassement d'une deuxième valeur de seuil de la valeur du changement de la direction du vent, au moins une pale de rotor est calée dans une zone spécifiable du cercle de la pale de rotor et le dispositif d'orientation est mis en marche.

11. Procédé selon la revendication 8, **caractérisé en ce qu'**en cas de dépassement d'une troisième valeur de seuil de la valeur du changement de la direction du vent, l'orientation s'effectue uniquement avec le dispositif d'orientation.

12. Procédé selon l'une quelconque des revendications précédentes, **caractérisé en ce que** les dispositifs d'orientation sont alimentés avec un courant correspondant en vue de soutenir le calage azimutal au moyen d'un calage de la pale de rotor afin que le réglage azimutal puisse être effectué plus rapidement.

13. Procédé selon l'une quelconque des revendications précédentes, **caractérisé en ce que** le dispositif d'orientation moteur est opéré en mode freinage pendant le calage azimutal au moyen d'un calage de la pale de rotor, par exemple **en ce que** le dispositif d'orientation moteur est réalisé sous forme de moteur asynchrone et est alimenté, pendant le calage azimutal au moyen d'un calage de la pale de rotor, avec un courant continu, par exemple un courant continu inférieur à 10 % du courant nominal.
